Europäisches Patentamt

European Patent Office

Office européen des brevets

(19)

(11)  EP 0 887 794 A1

(12)  **EUROPEAN PATENT APPLICATION**
published in accordance with Art. 158(3) EPC

(43) Date of publication:
30.12.1998  Bulletin 1998/53

(21) Application number: 96906054.0

(22) Date of filing: 15.03.1996

(51) Int. Cl.$^6$: **G11B 9/00**

(86) International application number:
PCT/JP96/00682

(87) International publication number:
WO 97/35308 (25.09.1997  Gazette 1997/41)

(84) Designated Contracting States:
DE FR NL

(71) Applicant: **Hitachi, Ltd.**
**Chiyoda-ku, Tokyo 101 (JP)**

(72) Inventors:
• **HOSAKA, Sumio**
**Tokyo 190-01 (JP)**

• **NAKAMURA, Kimio**
**Saitama-ken 359-1133 (JP)**
• **KOYANAGI, Hajime**
**Saitama 343 (JP)**

(74) Representative:
**Strehl Schübel-Hopf & Partner**
**Maximilianstrasse 54**
**80538 München (DE)**

(54)  **RECORDING APPARATUS**

(57)  A probe (1) and a recording medium (2) are placed close to each other in an atomic force microscope. While a predetermined repulsion (or a predetermined gap) is maintained between the probe and medium, an attraction (electrostatic force or push force) is applied between them so that the surface of the recording medium may suffer plastic deformation at room temperature to form a recess structure (3). Each recess in the surface forms a recording unit which is read to retrieve information.

FIG. 1

(a)

PIT STRUCTURE
3

1

2

(b)

F

FORCE
(VOLTAGE)

WRITING FOURCE

X(Y) POSITION →

EP 0 887 794 A1

**Description**

BACKGROUND OF THE INVENTION

Field of the Invention:

The present invention relates to a recording device, and particularly to a device for recording information in a size of several tens of nanometers or less by applying the principle of an atomic force microscope.

Description of the Related Art:

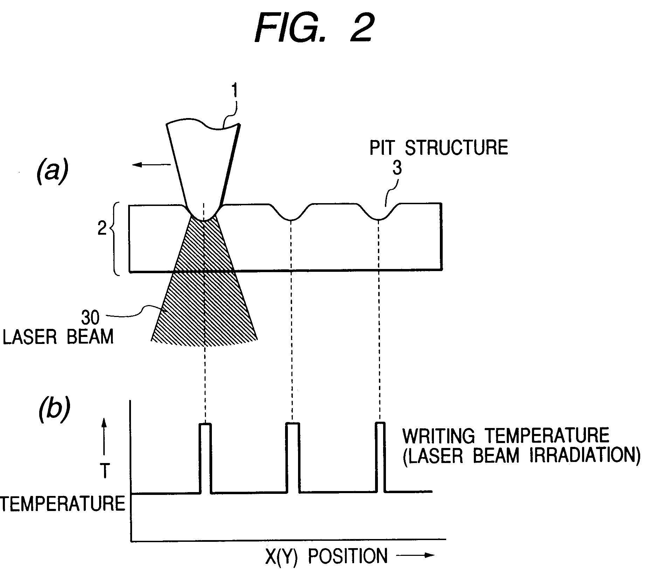

A recording method of a nanometer order using plastic deformation has been described in, for example, the Applied Physics Letter Vol. No. 61 (1992), p.p. 1003-1005. A thermo-mechanical recording system for providing the application of heat by a pulsed laser beam and the application of pressure by a tip (head) has been disclosed therein. According to this system, a head (tip) 1 and a recording media 2 are kept in contact with each other so as to keep a constant atomic force (repulsive force) therebetween and a portion below the head is heated at an arbitrary position by a laser beam 30, as shown in Fig. 2. In doing so, the surface of the recording media 2 becomes softer with a rise in its temperature. Therefore, pit structures 3 can be formed in the recording media 2 even by a small force. This takes advantage of the fact that although the surface of the recording media is not plastically deformed by the atomic force (repulsive force) at ordinary temperatures, a plastic deformation occurs because yield stress point is reduced due to the rise in the temperature of the recording media heated by laser irradiation, whereby pit structures can be easily formed even by the atomic force (repulsive force) applied between the head and the recording media. Thus, the prior art has utilized means for applying the slightly strong constant atomic force and laser irradiating means for applying heat. Although the laser irradiating means plays an auxiliary role in this case, it has a mechanism system and an optical system similar to those employed in optical recording as devices in addition to a repulsive force control mechanism and hence leads to a complex structure, so that the light mounting or provision of the device turns into a problem.

SUMMARY OF THE INVENTION

With the foregoing in view, it is therefore an object of the present invention to provide a recording device which utilizes plastic deformation capable of providing its simplification as the recording device and has a recording bit size of several tens of nanometers or less.

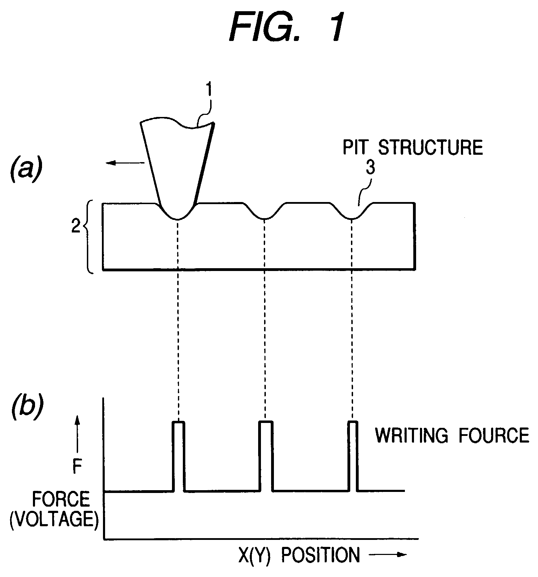

In order to achieve the above object, the present invention makes use of a system wherein a force exceeding a yield stress point for plastic deformation of a recording media 2 at ordinary temperature is generated between a tip 1 and the recording media 2 upon writing as shown in Fig. 1. For example, a method for applying an electrostatic force developed by voltage application to the recording media 2, using capacitance produced between the tip 1 and the recording media 2, or a method for forcing a cantilever toward the sample side by a piezo electronic device to thereby apply pressure to the recording media 2 is adopted as means for generating the force.

The method using the capacitance is equivalent to a method using an electrostatic force generated by applying positive and negative charges between both ends of the tip 1 and the recording media 2. Now, the tip and the cantilever (cantilever spring) uses Si doped with impurity elements, whereas the recording media makes use of one formed by applying a resist material or an ultra-violet cured resin or the like employed in a semiconductor process to a thickness of 1 μm or less. Further, a substrate utilizes an Si wafer doped with impurity elements. When a voltage V is applied between the cantilever and the Si wafer in this case, the following attractive force F is generated:

$$F = \varepsilon SV^2/2d^2 \qquad (1)$$

where $\varepsilon$: permittivity, S: the area of an electrode which serves as a capacitor, and d: the distance between the cantilever which serves as a capacitor and the Si wafer.

Assuming now that $\varepsilon$, S, d and V are respectively defined as $8 \times 10^{-12}$F/m, $50 \times 50$ μm$^2$, 5 μm and 100V, about $10^{-5}$N is generated as the attractive force F. This will result in a force larger by about two orders of magnitude than the plastic deformation yield stress point of the resist material or ultra-violet cured resin. Since the force at non-writing or the force set upon reading is normally set to $10^{-8}$N through $10^{-7}$N, the above force F reaches a force larger by 3 to 4 orders of magnitude than the set force. Thus, when a voltage of about 100V is applied to such a structure, a large force is produced and this can be applied as a writing force. A voltage source may simply be provided between the tip and the recording media in place of the mechanism and optical system for the laser irradiation as compared with the prior art. Thus, the recording device can be lightly mounted and simplified.

A method of vertically pressing a tip toward the surface of a recording media by a piezo electronic device is known as another example. When the tip or cantilever is now pressed by X, a force given by the following equation is further added to the recording media:

$$F = kX \qquad (2)$$

where k: spring constant of cantilever.

Assuming that k and X are now defined as 1N/m and 1 μm respectively, the force results in $10^{-6}$ N. This force can produce plastic deformation although close to the critical point and can be thus used for writing. Even in the case of this device configuration, a piezo electronic device having a small drive range and its driving circuit may simply be provided. Thus, the recording device can be lightly mounted and simplified.

BRIEF DESCRIPTION OF THE DRAWINGS

While the specification concludes with claims particularly pointing out and distinctly claiming the subject matter which is regarded as the invention, it is believed that the invention, the objects and features of the invention and further objects, features and advantages thereof will be better understood from the following description taken in connection with the accompanying drawings in which:

Fig. 1 shows the principle of writing according to the present invention, wherein Fig. 1(a) is a record schematic diagram, and Fig. 1(b) is a pressure timing chart at recording;
Fig. 2 illustrates the principle of thermo-mechanical writing using a laser beam, which indicates a prior art, wherein Fig. 2(a) is a schematic diagram for recording, and Fig. 2(b) is a timing chart showing the application of heat to a substrate or the irradiation of a laser beam;
Fig. 3 is a diagram showing one embodiment of the present invention, using an electrostatic force;
Fig. 4 is a diagram illustrating another embodiment of the present invention, using a piezo electronic device;
Fig. 5 is a diagram depicting a further embodiment of the present invention, using a disc rotation mechanism;
Fig. 6 is a diagram showing a still further embodiment of the present invention, using a disc rotation mechanism; and
Fig. 7 is a diagram illustrating a still further embodiment of the present invention, using a disc rotation mechanism.

DETAILED DESCRIPTION OF THE PREFERRED EMBODIMENTS

Preferred embodiments of the present invention will hereinafter be described in detail with reference to the accompanying drawings.

(First Embodiment)

A first embodiment of the present invention will be explained below.

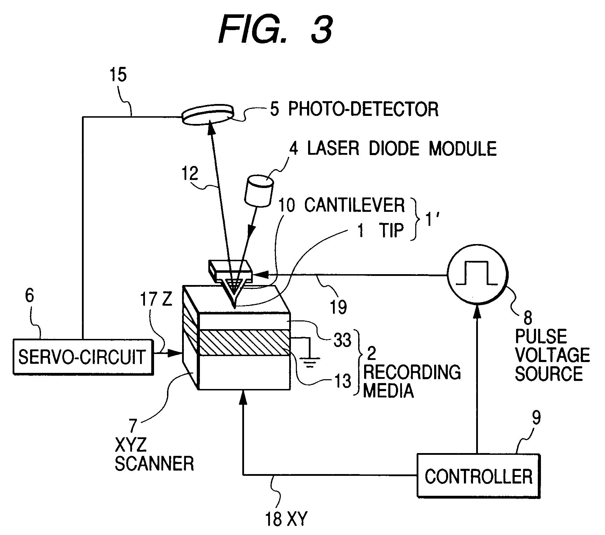

Fig. 3 is a schematic diagram showing a recording device using an atomic force microscope (hereinafter abbreviated as "AFM"). The technique of AFM has been disclosed in the Physical Review Letters, Vol. No. 56 (1986), p.p. 930. A force under which a conductive tip 1' and a recording media 2 contact with each other, deflects a plate spring (cantilever) 10. The recording media 2 comprises a board or substrate 13 and a recording layer 33. A photodetector 5 senses a displacement in laser beam 12 emitted from a laser diode module 4, which is reflected from the back of the cantilever 10, to thereby detect the contact force between the tip 1' and the recording media 2. A servo-circuit 6 outputs a Z drive signal 17 to an XYZ scanner 7 so that a signal 15 outputted from the photodetector 5 reaches a constant value. Thus, the contact force between the tip 1' and the recording media 2 is controlled to a constant value. A pulse voltage source 8 applies a voltage pulse 19 to the tip 1' so as to generate an electrostatic force between the tip 1' and the recording media 2. When a voltage V is applied between the tip 1' and an Si wafer, an attractive force F given by the following equation is generated:

$$F = \varepsilon \, SV^2/2d^2 \qquad (3)$$

where $\varepsilon$: permittivity, S: the area of an electrode which serves as a capacitor, and d: the distance between the cantilever 10 which serves as a capacitor and the Si wafer 13.

Assuming now that $\varepsilon$, S, d and V are defined as $8 \times 10^{-12}$ F/m, $50 \times 50 \; \mu m^2$, $5 \; \mu m$ and 100V, respectively, about $10^{-5}$ N is generated as the attractive force F. This will result in a force larger by about two orders of magnitude than a plastic deformation yield stress point of a resist material or ultra-violet cured resin. Since the force at non-writing or the force set upon reading is normally set to $10^{-8}$ N through $10^{-7}$ N, the above force F reaches a force larger by 3 to 4 orders of magnitude than the set force. Thus, when a voltage of about 100V is applied to such a structure, a large force is produced and this can be applied as a writing force.

Thus, the tip 1' is pushed into the surface of the recording media 2, so that plastic deformation occurs in the surface thereof so as to form pit structures 3. The XYZ scanner 7 is driven in a Z direction to control the contact force between the tip 1' and the recording media 2 to a constant value and driven in X and Y directions to move or displace the tip 1' relative to the recording media 2. As the tip 1', one is often used which is formed integrally with the cantilever 10 in accordance with a semiconductor process. Upon actual writing, the application of a voltage pulse 19 from a controller 9 following the address according to an XY signal 18 or a r-θ signal allows writing (storing) of recording information. In addition to this, a drive source using a magnetic field and an electric field may be used. This method falls within the scope of the present invention.

A leading end of the tip 1 can be formed to a curvature radius of 20nm or less. Each of the tip 1 and the cantilever 10 is normally composed of an insulating material such as silicon oxide, silicon nitride or the like. One obtained by coating the surface with gold or platinum or the like to cause it to have conductivity and one formed from an Si substrate having conductivity or semi-conductivity are used for them. The size of each formed pit structure is substantially determined depending on the size or magnitude of the leading end of a tip electrode 2. According to this method, a Tb/in$^2$ - level record for forming a pit structure having a diameter of 20nm or less can be implemented.

Reading can be performed using this system. The normal method is the same as where each pit structure 3 is measured by AFM. There are known a method for holding constant, a gap or space defined between the tip and the recording media 2 to thereby detect each structure 3 from the Z drive signal 17 and a method for detecting it from the motion of the tip 1. The latter method is used upon high-speed scanning. Thus, a voltage source may be provided between the tip and the recording media in place of the mechanism or optical system used for laser irradiation as compared with the prior art, whereby the light mounting or provision and simplification of the recording device can be achieved.

(Second Embodiment)

A second embodiment of the present invention will next be described.

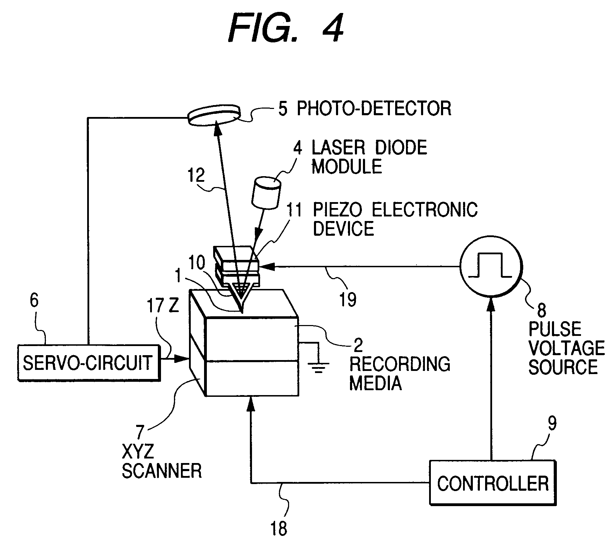

Fig. 4 shows an embodiment in which a tip 1 is mechanically pressed against a recording media 2 so as to perform writing. In the present embodiment, a method of holding a tip 1' by a piezo electronic device 11 is used. When a voltage 19 is applied to the piezo electronic device 11 upon writing, the tip 1 is forced or pushed toward the sample side so that pit structures 3 are formed under the mechanical pressure.

When the tip 1 or cantilever 10 is now forced toward the sample side by an X, the force given by the equation (2) is further applied to the recording media 2. Assuming that a spring constant of the cantilever 10 is 1N/m and X is 1 μm, the force produced upon pushing will result in 10$^{-6}$. This force can produce plastic deformation although close to the critical point and can be thus used for writing. Although the piezo electronic device 11 is provided on the tip side in the drawing, it may be provided on the recording media side.

Incidentally, other writing and reading are performed by the same method as that in the above-described first embodiment.

(Third Embodiment)

A third embodiment of the present invention will be described below.

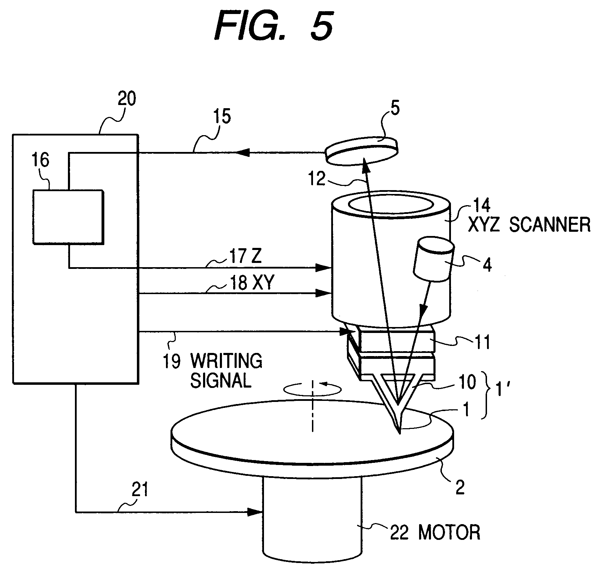

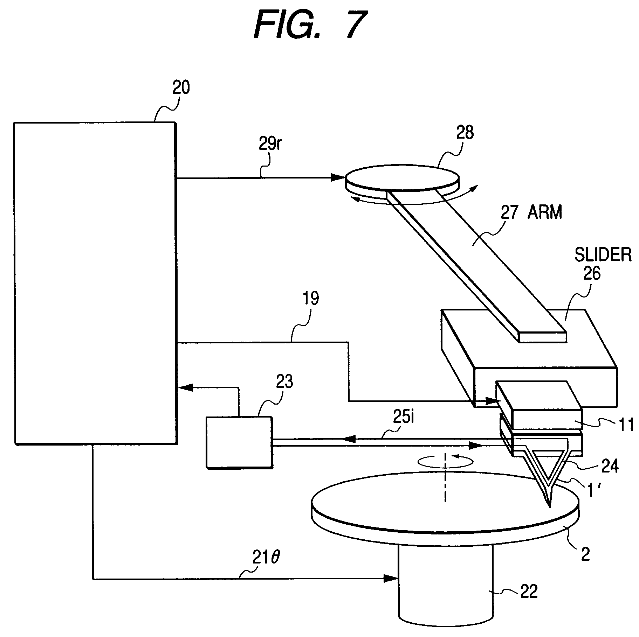

Fig. 5 shows an embodiment in which the present invention is applied to disc rotation recording. In this case, a disc recording media 2 having the same structure as that for the recording media 2 is mounted on a disc-driving motor 22 driven by a rotation signal 21 sent from a controller 20. Although the recording media 2 has been XYZ-driven in Figs. 3 and 4, the present embodiment is hard to use this method because of the rotatable body in the present embodiment. Therefore, a method of XYZ-driving the tip 1' side is adopted. Further, a method using the same piezo electronic device 11 as that employed in the second embodiment is used for writing. In a manner similar to the above-described two embodiments even in this case, the gap or interval between the tip 1 and the recording media 2 is held constant by inputting a signal 15 indicative of the position of the tip 1, which is outputted from a position sensor 5, to a servo-circuit 16 and inputting a Z drive signal 17 to a scanner 14 under the use of a laser beam deflection detection method. Although the XYZ scanner 14 formed by a cylindrical piezo electronic device is used in the present embodiment, various scanners such as a tripod type, etc. can be adopted. Although a mechanism movable in the radial direction of a tip 1', which is shown in Fig. 7, is omitted in the drawing, this mechanism is necessary for information recording.

The writing and reading are substantially the same as the methods mentioned up to this. However, position information or address is defined as polar coordinates. Therefore, an address circuit in a controller makes use of the same one as the current optic disc or magnetic disc. Further, the same one is adopted as a mechanism or system for positioning tracks, sectors or the like.

(Fourth Embodiment)

A fourth embodiment of the present invention will be described below.

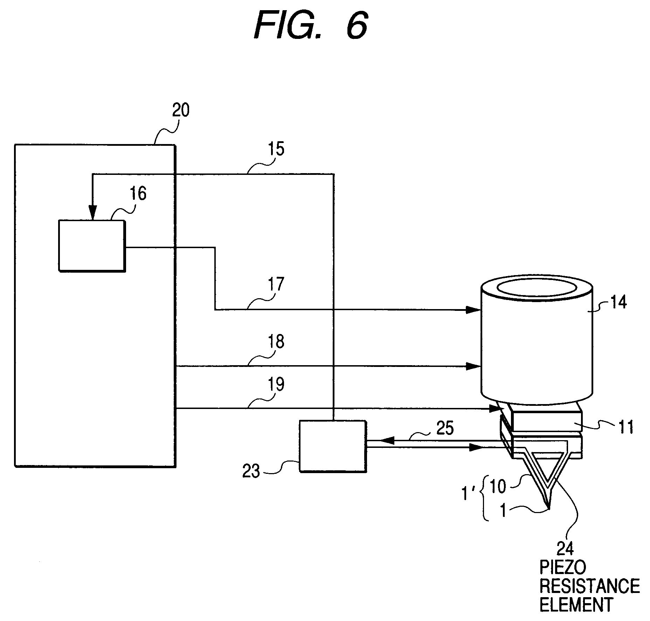

The third embodiment illustrated in Fig. 5 has encountered difficulties in reducing the head of the recording device in size because the laser beam deflection detection method serves as a large mechanism portion. The present embodiment adopts such a configuration that one formed by placing a piezo resistance element 24 on a cantilever 10 is adopted as for a tip 1' as shown in Fig. 6 to omit a laser beam deflection detector. As the piezo resistance element 24, one formed directly in the cantilever 10 by ion-implantation or one affixed to the cantilever 10 is used. When the tip 1 undergoes a force and is deflected correspondingly, the resistance of the piezo resistance element 24 increases. The amount of deflection of the tip 1, i.e., the force is detected by detecting its resistance value. A Wheatstone bridge circuit or the like is used for its detection. A detector 23 detects a resistance detected signal 25 and inputs a signal 15 indicative of the force of the tip 1, which is obtained therefrom, to a servo-circuit. Further, the gap or space between the tip 1 and a recording media 2 is kept constant. In this condition, writing/reading operations are performed in a manner similar to the methods illustrated in the first through third embodiments.

(Fifth Embodiment)

A fifth embodiment of the present invention will be described below.

In the fourth embodiment illustrated in Fig. 6, the XYZ scanner 7(14) has been used for the driving of the control on the space between the tip 1 and the recording media 2. However, this is large in dimension and weight and hence the head will increase in size. To solve this drawback, a writing piezo electronic device 10 and a tip 1' are mounted to a slider 26 used for magnetic recording to form a recording head as shown in Fig. 7 in the present embodiment. The recording head is mounted onto an arm 27 and a swing mechanism 28 driven by a swing mechanism drive signal 29 so as to construct a radial positioning mechanism. Although the slider 26 and the recording media 2 are illustrated in the drawing as if to be separated from each other, the tip 1 is operating so as to be kept in contact with the recording media 2 at a distance of at least 1nm or less. The tip 1 operates in a manner similar to the second and fourth embodiments and serves so as to record information on the recording media 2. In addition to this, a method or the like using the electrostatic force shown in the first embodiment can be used.

The characteristics of the recording media employed in the present invention will next be described. Fig. 3 shows a cross-section structure of the recording media 2. It is desirable that if described basically, a recording layer 33 is a material of which elastic limit (critical yield stress point) is lower than an external force and excellent in processability and the evenness of its surface is less than or equal to a few nanometers. When the electrostatic force is used as shown in Fig. 3, the recording media 2 adopts a two-layer structure of the recording layer 33 and the substrate 13. It is desirable that the substrate 13 has conductivity or semiconductivity and the recording layer 33 has an insulating property and is a material whose plastic deformation yield stress point is smaller than that of the substrate 13. In the method of pressing the tip 1 shown in Fig. 4 against the recording media 2 so as to perform writing, a polymer substrate like polycarbonate other than the conductive one is used as the substrate 13. It is considered that this polymer substrate is singly used as the substrate 13 or one formed by applying a resin to a silicon substrate is used as the substrate 13. In this case, a conductive layer may not be used for a sample. This point of view is different from the case in which the electrostatic force is used. Allowing the surface of the recording media 2 to have an insulating property could lead to charge-up in reading. It is thus of importance that a thin conductive film easy to produce plastic deformation is applied thereto. It is desirable that a recording media having a three-layer structure and a two-layer structure is used as the structure of the recording media 2 which applies the recording method shown in Fig. 4.

Owing to the use of the recording device and the recording media, uniform pit structures each having a diameter of about 20nm can be stably formed.

According to the present invention, as has been described above, if the electrostatic force or the pressing force of the tip 1' is used for writing without the application of heat, pit structures each having a size less than or equal to several tens of nanometers can be uniformly and stably formed. This means that a recording device whose recording density ranges from a few 100 $Gb/in^2$ to $1Tb/in^2$ or more can be provided. Further, a device configuration may be taken so that a piezo electronic device having a small drive range and its driving circuit are provided and an applied power supply for generating an electrostatic force is prepared. Thus, the recording device can be lightly implemented and simplified. Further, since recording can be performed at ordinary temperature, bits smaller than at the thermo-mechanical recording indicative of the prior art can be formed in the present invention. This will result from the fact that the prior art thermo-mechanical recording extends to a wide range of plastic material flow because thermal deformation is also added to the formation of bits and the temperature of the surface of the recording media 2 is high.

While the present invention has been described with reference to the illustrative embodiments, this description is not intended to be construed in a limiting sense. Various modifications of the illustrative embodiments, as well as other embodiments of the invention, will be apparent to those skilled in the art on reference to this description. It is therefore contemplated that the appended claims will cover any such modifications or embodiments as fall within the true scope of the invention.

**Claims**

1. A recording device having a plurality of pit structures formed on the surface of a recording media to thereby record information thereon, comprising:

   a head for applying a writing force to the recording media to thereby make plastic deformation of the recording media at room temperature so as to form the plurality of pit structures on the recording media.

2. The recording device according to claim 1, wherein said head comprises a solid tip having a sharpened leading end, a small force detecting plate spring for holding said sold tip, and means for detecting a displacement of said plate spring.

3. The recording device according to claim 1, wherein either said head or said recording media is shifted in position to drive the same so that their relative positions approach each other, whereby said writing force is generated.

4. The recording device according to claim 1, wherein a voltage is applied between said head and said recording media to thereby generate said writing force.

5. The recording device according to claim 1, wherein said recorded information is read based on said detected signal indicative of the displacement in said plate spring.

6. The recording device according to claim 3, wherein a reverse voltage effect is used for the drive source.

7. The recording device according to claim 3, wherein electromagnetic induction is used for the drive source.

8. The recording device according to claim 1, said recording media comprises a substrate and a write layer formed on said substrate.

9. The recording device according to claim 8, wherein said substrate is either a semiconductor or a conductor.

10. The recording device according to claim 8, wherein said recording media is constructed so that a plastic deformation yield stress point of said write layer thereof is smaller than that of said substrate.

11. The recording device according to claim 1, further including a mechanism for rotatably moving said recording media and wherein the recording of the information onto the recording media is performed based on polar coordinates.

12. The recording device according to claim 2, wherein said plate spring has a stress gauge (piezo (stress) resistance element).

13. The recording device according to claim 2, wherein laser beam deflection detection means is used for detecting said displacement.

14. The recording device according to claim 1, wherein the top of said recording media is covered with a conductive film.

15. The recording device according to claim 1, wherein air floating means using a slider is used as means for fixedly controlling a force which acts between said tip and said recording media.

# FIG. 1

(a)

PIT STRUCTURE

1

2

3

(b)

↑
F

FORCE
(VOLTAGE)

WRITING FOURCE

X(Y) POSITION ⟶

# FIG. 2

(a)

PIT STRUCTURE

1

3

2

30
LASER BEAM

(b)

↑
T

TEMPERATURE

WRITING TEMPERATURE
(LASER BEAM IRRADIATION)

X(Y) POSITION ——→

# FIG. 3

# FIG. 4

5 PHOTO-DETECTOR

4 LASER DIODE MODULE

12

11 PIEZO ELECTRONIC DEVICE

10

1

19

6

17 Z

SERVO-CIRCUIT

2

RECORDING MEDIA

8

PULSE VOLTAGE SOURCE

7

XYZ SCANNER

9

CONTROLLER

18

# FIG. 5

20

15

5

16

12

14
XYZ SCANNER

17 Z

18 XY

4

11

19 WRITING
SIGNAL

10

1' 1

2

21

22 MOTOR

# FIG. 6

# FIG. 7

## INTERNATIONAL SEARCH REPORT

| | International application No. |
|---|---|
| | PCT/JP96/00682 |

**A. CLASSIFICATION OF SUBJECT MATTER**

Int. Cl$^6$  G11B9/00

According to International Patent Classification (IPC) or to both national classification and IPC

**B. FIELDS SEARCHED**

Minimum documentation searched (classification system followed by classification symbols)

Int. Cl$^6$  G11B9/00

Documentation searched other than minimum documentation to the extent that such documents are included in the fields searched

| Jitsuyo Shinan Koho | 1955 – 1995 |
|---|---|
| Kokai Jitsuyo Shinan Koho | 1971 – 1995 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, 6-251436, A (Canon Inc.), Setember 9, 1994 (09. 09. 94)(Family: none) | 1-3, 8, 9 |
| A | JP, 63-96756, A (Nippon Telegraph & Telephone Corp.), April 27, 1988 (27. 04. 88)(Family: none) | 1 |
| Y | JP, 5-87514, A (Canon Inc.), April 6, 1993 (06. 04. 93)(Family: none) | 6 |
| Y | JP, 5-210875, A (Canon Inc.), August 20, 1993 (20. 08. 93)(Family: none) | 6 |
| Y | JP, 1-154569, U (Victor Co. of Japan, Ltd.), October 24, 1989 (24. 10. 89)(Family: none) | 7 |
| Y | JP, 3-154240, A (Matsushita Electric Ind. Co., Ltd.), July 2, 1991 (02. 07. 91)(Family: none) | 8, 9, 14 |
| Y | JP, 4-502084, A (The Board of Trustees of | 8, 9 |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| May 10, 1996 (10. 05. 96) | May 21, 1996 (21. 05. 96) |

| Name and mailing address of the ISA/ | Authorized officer |
|---|---|
| Japanese Patent Office | |
| Facsimile No. | Telephone No. |

Form PCT/ISA/210 (second sheet) (July 1992)

**INTERNATIONAL SEARCH REPORT**

International application No.

PCT/JP96/00682

| C (Continuation). DOCUMENTS CONSIDERED TO BE RELEVANT | | |
|---|---|---|
| Category* | Citation of document, with indication, where appropriate, of the relevant passages | Relevant to claim No. |
| | Leland Stanford Jr. Univ.),<br>April 9, 1992 (09. 04. 92)<br>& WO, 9100592, A3 | |
| Y | JP, 5-71951, A (Canon Inc.),<br>March 23, 1993 (23. 03. 93)(Family: none) | 13 |
| Y | JP, 5-187866, A (Canon Inc.),<br>July 27, 1993 (27. 07. 93)(Family: none) | 13 |
| Y | JP, 4-157644, A (Canon Inc.),<br>May 29, 1992 (29. 05. 92)(Family: none) | 15 |
| Y | JP, 7-21596, A (Hitachi, Ltd.),<br>January 24, 1995 (24. 01. 95)(Family: none) | 15 |